# EUROPÄISCHE PATENTANMELDUNG

(11) **EP 1 112 809 A2**
(43) Veröffentlichungstag der Anmeldung: **04.07.2001**
(21) Anmeldenummer: 00811231.0
(22) Anmeldetag: 22.12.2000
(51) Int. Cl.: B23Q 11/00

(54) **Saugbohrer**

(30) Priorität: 03.01.2000 DE 10000013
(71) Anmelder: HILTI Aktiengesellschaft, 9494 Schaan (LI)
(72) Erfinder: Kleine, Werner, 28832 Achim (DE); Bongers, Hans-Werner, 81477 München (DE)
(74) Vertreter: Wildi, Roland

(57) **Zusammenfassung**

Das Werkzeug (1) zum Bohren und/oder Meisseln ist einsetzbar in eine Handwerkzeugmaschine, die eine Absaugvorrichtung (10), mit einem das Werkzeug (1) umfassenden Gehäuse (11) aufweist. Das Werkzeug (1) weist einen rohrförmigen Schaft (2) auf, der einen axial verlaufenden Durchgangskanal (8) besitzt. An das dem bohrrichtungsseitigen Ende des Schaftes (2) gegenüberliegenden Ende schliesst sich ein mit dem Gehäuse (11) der Absaugvorrichtung (10) zusammenwirkendes Anschlussteil (3) an, dessen Umfangsfläche von einer Querbohrung (7) durchbrochen ist, welche eine Saugkammer (12) der Absaugvorrichtung (10) mit dem Durchgangskanal (8) verbindet. Zur Optimierung der Bohrleistung ist der Durchmesser des Anschlussteils (3) mit dem Durchmesser eines in Verbindung mit der Handwerkzeugmaschine stehenden Einsteckendes (4) abgestimmt.

## Beschreibung

Die Erfindung betrifft ein Werkzeug zum Meisseln und/oder Bohren mit einem rohrförmigen Schaft an den sich am einen Längsende ein Bohrkopf und am anderen Längsende ein Anschlussteil mit einem Einsteckende anschliesst, wobei der Schaft einen axial verlaufenden Durchgangskanal aufweist, in den eine zum Umfang des Anschlussteils hin offene Querbohrung mündet.

Die Werkzeuge der genannten Art dienen der Bearbeitung von Gestein, Beton, Mauerwerk und dergleichen spröden Materialen. So sind beispielsweise Werkzeuge bekannt, bei denen das abgetragene Bohrklein mittels wenigstens einer, am Schaft angeordneten wendelförmigen, Abfuhrnut aus dem Bohrloch abtransportiert wird.

Darüber hinaus sind in der Vergangenheit, wie die DE 2 417 228 A1 zeigt, auch sogenannte Saugbohrer bekannt geworden. Diese bestehen beispielsweise aus einem eine axiale Bohrung aufweisenden Werkzeug, das mit einer Absaugvorrichtung verbindbar ist, die an eine einen Unterdruck erzeugende Vorrichtung, insbesondere einen Staubsauger oder dergleichen, angeschlossen werden kann. Die Absaugvorrichtung weist dabei ein Gehäuse auf, welches das Werkzeug, das einen rohrförmigen Schaft, der einen axial verlaufenden Durchgangskanal aufweist, zumindest teilweise umfasst. Ein dem bohrrichtungsseitigen Ende des Schaftes gegenüberliegendes Anschlussteil wirkt mit dem Gehäuse zusammen. Eine zum Umfang des Anschlussteils hin offene Querbohrung, die mit der Absaugvorrichtung zusammenwirkt, mündet in den Durchgangskanal.

Die Bohrleistung dieser als Saugbohrer ausgebildeten Werkzeuge, die in Handwerkzeugmaschinen mit relativ geringer Schlagenergie eingesetzt werden, ist bisher unbefriedigend. So ist bei diesem bekannten Werkzeug der Schaft über eine Gewindeverbindung in das Anschlussteil eingeschraubt. Durch die Trennstelle zwischen Schaft und Anschlussteil geht Energie verloren und insgesamt ist eine zu grosse Masse im Bereich des Anschlussteils konzentriert, was zu einer Reduzierung der Bohrleistung führt.

Der weitere dieser Veröffentlichung entnehmbare Vorschlag, das Werkzeug einstückig auszubilden, führt zu einem erheblich grösseren Durchmesser des Anschlussteils gegenüber dem Schaft und dem Einsteckende. Dies hat einerseits eine Massenanreicherung im Bereich des Anschlussteils zur Folge und macht andererseits bei der Herstellung eine erhebliche Zerspanung des Rohlings im Bereich des Schaftes und des Einsteckendes notwendig. Nebst den Nachteilen bezüglich Bohrleistung aufgrund der Massenanreicherung, steigen die Herstellungskosten des Werkzeuges erheblich.

Der vorliegenden Erfindung liegt die Aufgabe zugrunde, die Dimensionierung von Werkzeugen, die mit relativ geringer Schlagenergie eingesetzt werden, zu optimieren um dadurch eine höhere Bohrleistung zu erreichen. Zusätzlich sollen die Herstellungskosten wirtschaftlich ausfallen.

Erfindungsgemäss wird die Aufgabe dadurch gelöst, dass das Anschlussteil über einen wesentlichen Teil seiner Längserstreckung einen Durchmesser aufweist, der höchstens dem 1,6-fachen des Durchmessers des Einsteckendes entspricht.

Die erfindungsgemässe Dimensionierung des Durchmessers des Anschlussteils und des Durchmessers des Einsteckendes verhindert eine Massenanreicherung im Bereich des Anschlussteils. Als Folge daraus ergibt sich eine bessere Schlagenergieübertragung, woraus eine höhere Bohrleistung des Werkzeugs resultiert. Zugleich fallen die Herstellungskosten gegenüber bekannten Lösungen wirtschaftlicher aus, da die Durchmesser des Anschlussteils und des Einsteckendes sich nur gering unterscheiden und somit beispielsweise bei einstükkiger Ausbildung ein materialaufwendiges Zerspanen des Rohlings entfällt.

Stehen nebst der Optimierung der Bohrleistung auch die Herstellungskosten im Vordergrund, so wird der Durchmesser des Anschlussteils, insbesondere bei einstückiger Ausbildung des Werkzeugs, vorzugsweise das 1- bis 1,2-fache des Durchmessers des Einsteckendes betragen. Dadurch wird das Zerspanen des Rohlings auf ein Minimum reduziert und es wird eine optimale Wirtschaftlichkeit erreicht.

Um eine wirtschaftliche Herstellung des Werkzeugs zu ermöglichen, entspricht zweckmässigerweise der Durchmesser des Anschlussteils mindestens dem Durchmesser des Bohrkopfs. Ausserdem gewährleistet eine derartige Dimensionierung des Durchmessers des Anschlussteiles und des Durchmessers des Bohrkopfes eine optimale Wirkung der Absaugvorrichtung.

Dadurch, dass das Anschlussteil und der Schaft zweiteilig ausgebildet und vorzugsweise durch bekannte Fügetechniken miteinander verbunden sind, wird zu den wesentlichen herstellungstechnischen Vorteilen dank der festen Verbindung und geringen Masse eine optimierte Schlagübertragung zwischen Einsteckende und Bohrkopf erzielt. Die Verwendung von bekannten Fügetechniken fördert die wirtschaftliche Herstellung des Werkzeugs, insbesondere aufgrund der Vereinfachung der zum Einsatz gelangenden Produktionsanlagen.

Unter Anwendung der an sich bekannten Fügetechniken sind zweckmässigerweise das Anschlussteil und der Schaft durch Löten, Kleben, Schweissen oder Schrumpfen miteinander verbunden, um eine feste, dauerhafte und zugleich wirtschaftlich herstellbare Verbindung zu erhalten.

Vorteilhafterweise ist das Anschlussteil und der Schaft durch einen Formschluss miteinander verbunden, um eine konstruktiv einfache und wirtschaftliche Verbindung zu erhalten.

Die Erfindung wird nachstehend anhand eines, in einer Zeichnung wiedergegebenen, Ausführungsbeispieles näher erläutert.

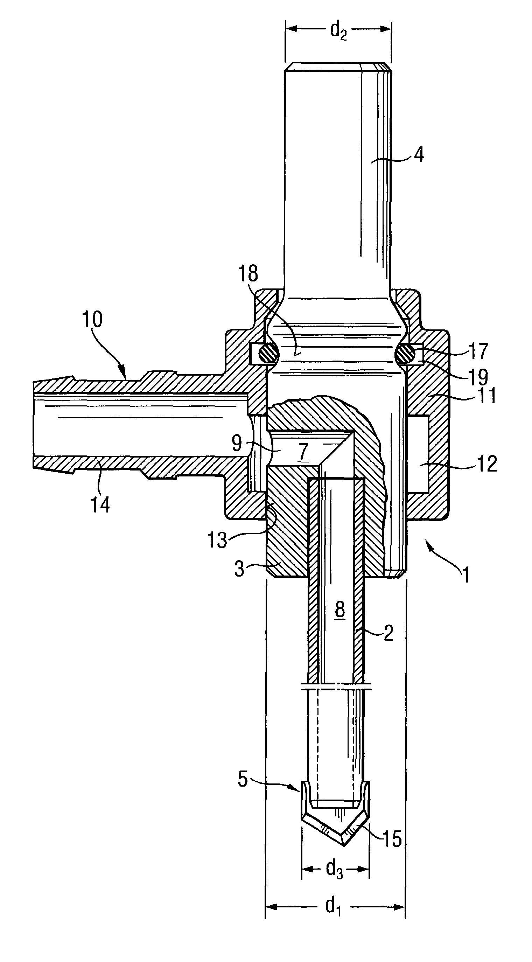

Die Zeichnung zeigt ein insgesamt mit 1 bezeichnetes Werkzeug, bestehend aus einem rohrförmigen Schaft 2, einem Anschlussteil 3 und einem Einsteckende 4. Das Werkzeug 1 wird im Bereich des Anschlussteils 3 von einer insgesamt mit 10 bezeichneten Absaugvorrichtung umfasst. Das Anschlussteil 3 weist einen Durchmesser d1 und das Einsteckende 4 einen Durchmesser d2 auf.

Der rohrförmige Schaft 2 besitzt einen axial verlaufenden Durchgangskanal 8, weist an einem Ende einen Bohrkopf 5 mit Durchmesser d3 auf und ist am gegenüberliegenden Ende mit dem Anschlussteil 3 verbunden. Das Einsteckende 4 dient dem Anschluss an eine, zeichnerisch nicht dargestellte, Handwerkzeugmaschine. Das Anschlussteil 3 besitzt eine Querbohrung 7, die in den Durchgangskanal 8 des Schaftes 2 mündet und eine Öffnung 9 an der Umfangsfläche des Anschlussteils 3 aufweist.

Die Absaugvorrichtung 10 besitzt ein Gehäuse 11, welches das Anschlussteil 3 an seinem Umfang entlang völlig und entlang der Längsachse grösstenteils umfasst. Das Gehäuse 11 bildet mit der vom Gehäuse 11 umfassten Umfangsfläche des Anschlussteils 3 eine Saugkammer 12, in die sich die Mündungsöffnung 9 der Querbohrung 7 erstreckt. Die Umfangsfläche des Anschlussteils 3 und Kontaktflächen 13 des Gehäuses 11 der Absaugvorrichtung 10 wirken abdichtend. Ein am Gehäuse 11 angeordneter Ansaugstutzen 14 mündet in die Saugkammer 12.

Im an das Einsteckende 4 grenzenden Bereich ist ein, den Aussenumfang des Anschlussteils 3 zweckmässigerweise teilweise umfassender, O-Ring 17 in einer Ausnehmung 18 angeordnet. Die Ausnehmung 18 erstreckt sich über den gesamten Umfang des Anschlussteils 3 und ist derart ausgebildet, dass ein Teil des O-Rings 17 die Umfangsfläche des Anschlussteils 3 radial überragt. Im Gehäuse 11 ist eine Nut 19 angebracht, sodass der auf dem Anschlussteils 3 angeordnete O-Ring 17 in die Nut 19 bringbar ist. Somit liegt eine lösbare Verbindung zwischen dem Gehäuse 11 der Absaugvorrichtung 10 und dem Anschlussteils 3 vor.

Der an einem Ende des Schafts 2 angeordnete Bohrkopf 5 weist beispielsweise eine Schneideplatte 15 auf, die aus Hartmetall besteht. Der Bohrkopf 5 ist mit dem freien Vorderende des rohrförmigen Schafts 2 beispielsweise durch Schweissen oder Löten verbunden.

## Patentansprüche

1. Werkzeug (1) zum Meisseln und/oder Bohren mit einem rohrförmigen Schaft (2), an den sich am einen Längsende ein Bohrkopf (5) und am anderen Längsende ein Anschlussteil (3) mit einem Einsteckende (4) anschliesst, wobei der Schaft (2) einen axial verlaufenden Durchgangskanal (8) aufweist, in den eine zum Umfang des Anschlussteils (3) hin offene Querbohrung (7) mündet, dadurch gekennzeichnet, dass das Anschlussteil (3) über einen wesentlichen Teil seiner Längserstreckung einen Durchmesser (d1) aufweist, der höchstens dem 1,6-fachen des Durchmessers (d2) des Einsteckendes (4) entspricht.

2. Werkzeug nach Anspruch 1, dadurch gekennzeichnet, dass das Anschlussteil (3) einen Durchmesser (d1) aufweist, der etwa dem 1- bis 1,2-fachen des Durchmessers (d2) des Einsteckendes (4) entspricht.

3. Werkzeug nach einem der Ansprüche 1 oder 2, dadurch gekennzeichnet, dass der Durchmesser (d1) des Anschlussteils (3) mindestens dem Durchmesser (d3) des Bohrkopfes (5) entspricht.

4. Werkzeug nach einem Anspruch 1 bis 3, dadurch gekennzeichnet, dass das Anschlussteil (3) und der Schaft (2) durch an sich bekannte Fügetechniken miteinander verbunden sind.

5. Werkzeug nach Anspruch 4, dadurch gekennzeichnet, dass das Anschlussteil (3) und der Schaft (2) durch Löten, Kleben, Schweissen oder Schrumpfen miteinander verbunden sind.

6. Werkzeug nach Anspruch 4, dadurch gekennzeichnet, dass das Anschlussteil (3) und der Schaft (2) durch einen Formschluss miteinander verbunden sind.
